Europäisches Patentamt

European Patent Office

Office européen des brevets

(19)

(11) Veröffentlichungsnummer: **0 286 692**
**B1**

(12) **EUROPÄISCHE PATENTSCHRIFT**

(45) Veröffentlichungstag der Patentschrift:
**28.02.90**

(51) Int. Cl.⁴: **A47L 1/08**, B60S 3/04

(21) Anmeldenummer: **87103738.8**

(22) Anmeldetag: **14.03.87**

(54) **Gerät zum Reinigen von planen Flächen.**

(43) Veröffentlichungstag der Anmeldung:
**19.10.88 Patentblatt 88/42**

(45) Bekanntmachung des Hinweises auf die Patenterteilung:
**28.02.90 Patentblatt 90/9**

(84) Benannte Vertragsstaaten:
**FR GB IT NL**

(56) Entgegenhaltungen:
**CH-A- 222 516**
**DE-A- 2 715 276**
**FR-A- 2 106 101**

(73) Patentinhaber: **LEIFHEIT Aktiengesellschaft,
Leifheitstrasse, D-5408 Nassau/Lahn(DE)**

(72) Erfinder: **Ohm, Heinz Josef, Grosser Ring 5,
D-6250 Limburg 9(DE)**
Erfinder: **Pätzold, Dieter, Scheubachweg 7,
D-5408 Nassau/Lahn(DE)**

## Beschreibung

Die Erfindung bezieht sich auf ein Gerät zum Reinigen von Fensterscheiben, Fußböden und dergleichen Flächen gemäß dem Oberbegriff des Anspruchs 1.

Nach der DE-GM 6 601 583 ist ein derartiges Gerät bekannt, bei dem die beiden Pressplatten gelenkig über Scharniere verbunden sind und sich über eine handbetätigte Stange V-förmig zusammenpressen lassen. Der auf den Pressplatten befestigte, schwammartige Reinigungskörper wird dabei allerdings ungleichmäßig stark zusammengedrückt, so daß eine sehr große Restfeuchte im Reinigungskörper verbleibt. Ein derartiges Gerät ist nur zur Grobreinigung von Fußböden geeignet. Eine Anwendung zur Reinigung von Fensterscheiben oder sonstiger ebener Flächen wie zum Beispiel Platten, Beläge in Bädern ist nur schwerlich denkbar.

Weiter ist nach der FR-A 2 106 101 ein Gerät bekannt, bei dem über ein Hebelsystem eine Preßplatte gegen ein Gehäuseteil bewegbar ist; dabei wird ein Schwamm gepreßt. Nachteilig an diesem Gerät ist das aufwendige Hebelsystem, eine montagefeindliche Bauweise und eine daraus resultierende unhandliche Bedienbarkeit.

Aufgabe der Erfindung ist es, ein Gerät zum Reinigen von Fensterscheiben und sonstigen ebenen Flächen zu schaffen, das unter Verwendung eines auswechselbaren, schwammartigen Reinigungskörpers ein leichtes Auswringen des Reinigungskörpers ermöglicht und bei leichter, einfacher Handhabung eine nur geringe Restfeuchte gewährleistet. Es soll weiter verhindert werden, daß die Hände mit dem Schmutzwasser in Verbindung kommen.

Diese Aufgabe wird mit den kennzeichnenden Merkmalen des Anspruchs 1 gelöst.

Beim Verbiegen zweier in etwa parallel liegender Pressplatten mit dazwischen liegendem Reinigungskörper werden günstige Hebelverhältnisse erreicht, so daß eine hohe Presskraft auf den Reinigungskörper ausgeübt wird. Dennoch sind die Handkräfte gering und können in ergonomisch optimaler Haltung ausgeübt werden.

Weitere Ausgestaltungen der Erfindung sind den Unteransprüchen zu entnehmen. Durch die parallele Anordnung des Schwammes mit einer Wischlippe ist es möglich, bei weniger beziehungsweise nur leicht verschmutzen Flächen diese in nur einem einzigen Arbeitsgang zu reinigen. Ein Abtropfen von Reinigungsflüssigkeit zum Beispiel beim Fensterreinigen wird zuverlässig verhindert.

Die Ausführung des Schwammes in unterschiedlichen Härtegrade ermöglicht es, zusätzlich auch hartnäckigen Schmutz sowie festsitzende Fliegen, zum Beispiel bei einer Autoscheibe, zu entfernen.

Die Anordung der Wischlippe in einem separaten Einschubkanal ermöglicht es, dieses Verschleißteil schnell zu wechseln. Die besonders Ausgestaltung des Einschubkanales mit Aussparungen beläßt der unteren Preßplatte ihre volle Elastizität.

Die besondere Ausführung der Gleitführung zwischen den beiden Pressplatten gewährleistet eine gleichmäßige Durchbiegung und somit ein gleichmäßiges Auspressen des Schwammes. Dies wird durch die spezielle Form des Halters, der im ersten Drittel der Länge gegenüber der Gleitführung die obere Pressplatte versteift, noch verbessert. Eine Hinterschneidung am Halterbereich ermöglicht das sichere Einhängen des Gerätes in, beziehungsweise an einem Reinigungseimer.

Zur guten Drainage ist die untere Pressplatte zusätzlich mit Abwasserablauföffnungen versehen.

Ein Ausführungsbeispiel der Erfindung wird im folgenden an Hand der Zeichnungen näher erläutert.

Es zeigen:

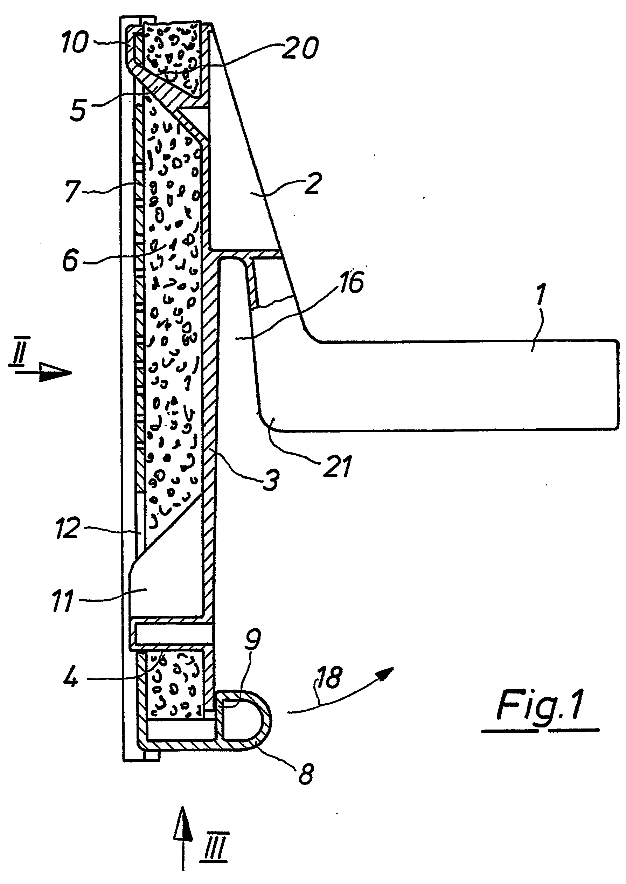

Figur 1 eine Ansicht eines Gerätes teilweise im Schnitt,

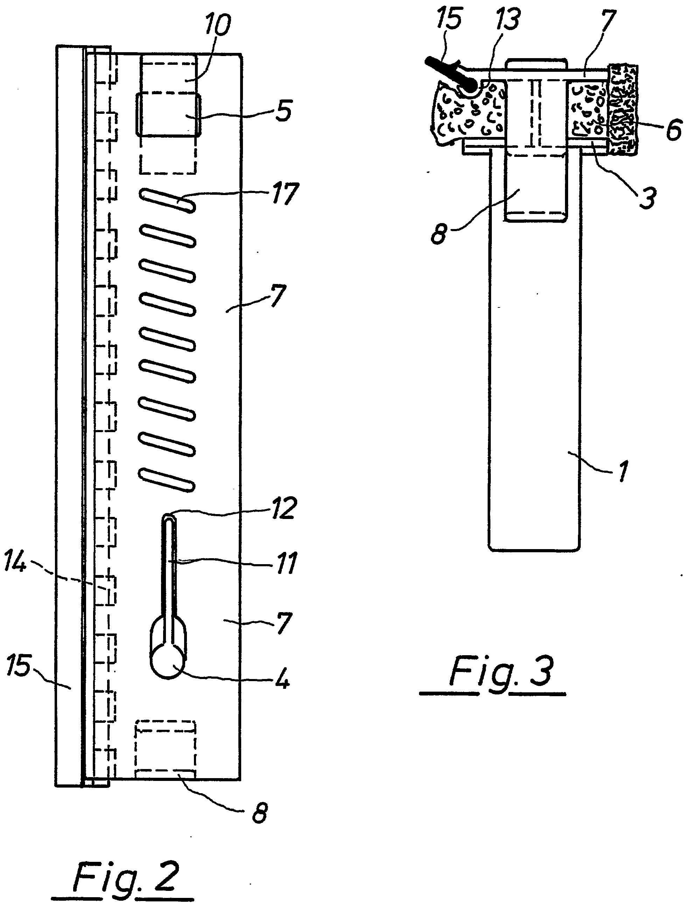

Figur 2 eine Ansicht gemäß der Richtung II in Figur 1,
Figur 3 eine Ansicht gemäß der Richtung III in Figur 1, und
Figur 4 eine Seitenansicht des Gerätes beim Auspressvorgang.

An einem Halter 1 ist über einen abgewinkelten Halterbereich 2 eine obere Pressplatte 3 gehalten. Diese Baugruppe Halter 1, Haltebereich 2 und obere Pressplatte 3 kann aus einem Spritzgußteil einstückig gefertigt sein.

Diese obere Pressplatte 3 ist auf der einen Seite mit einer Stützführung 4 und auf der anderen Seite mit einer Gleitführung 5 versehen. Über die Stützführung 4 und die Gleitführung 5 ist die obere Pressplatte 3 unter Zwischenschaltung eines Reinigungskörpers 6 mit einer unteren Pressplatte 7 verbunden. An der unteren Pressplatte 7 ist an der Seite der Stützführung 4 eine Handbetätigung 8 vorgesehen, die gleichzeitig einen Rastabsatz 9 hat. An der Gleitführung 5 ist ein Haltehaken 10 angeformt. Die Stützführung 4 ist zusätzlich über eine Versteifungsführung 11, die in einem Einschnitt 12 in der unteren Pressplatte 7 eingreift, abgestützt.

Die untere Pressplatte 7 ist weiter mit einem Einschubkanal 13, der auf der Schwammseite mit Aussparungen 1 versehen ist, ausgerüstet. In diesen Einschubkanal 13 ist eine Wischlippe 15 eingeschoben.

Der Haltebereich 2 ist mit einer Hinterschneidung 16 zum Aufhängen des Gerätes an einem Eimer versehen.

Die untere Pressplatte 7 ist weiter mit Wasserablauföffnungen 17 zum schnellen Abführen des ausgepressten Wassers versehen. Dieses Wasserablauföffnungen 17 sind zweckmäßigerweise etwas schräg gestellt.

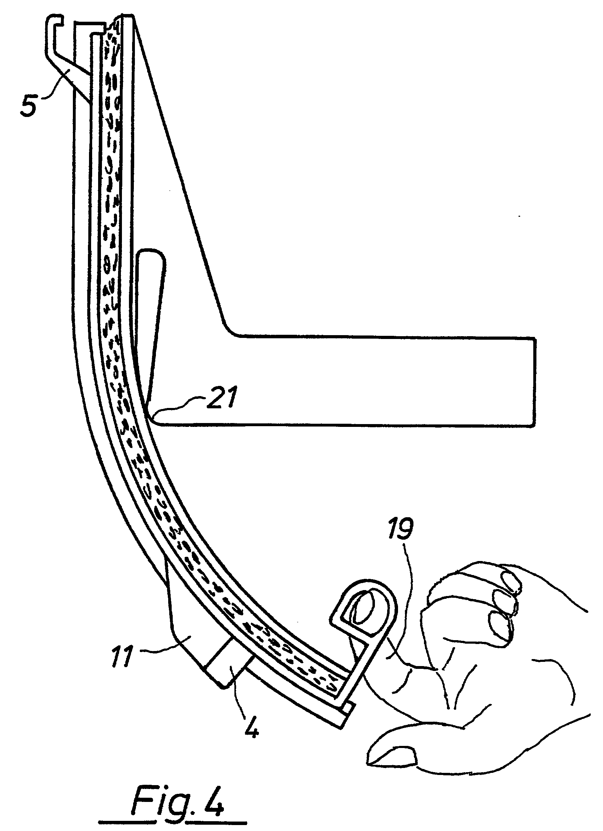

In Figur 4 ist der Auspressvorgang des Gerätes dargestellt. Durch Halten des Gerätes mit der einen Hand am Halter 1 und Ziehen in Richtung 18 an der Handbetätigung 8 mit dem Finger 19 werden die obere Pressplatte 3 und die untere Pressplatte 7 durchgeboben. Dabei gleitet die untere Pressplatte entlang der Schrägführung 20 an der Gleitführung 5 und entlang der Stützführung 4 gegen die obere Pressplatte 3. Die Schrägführung 20 gleicht die unterschiedlichen Längenverhältnisse beim Durchbiegen aus. Der Übergangsbogen 21 zwischen Halter 1 und Haltebereich 2 dient dabei als Anschlag.

**Patentansprüche**

1. Gerät zum Reinigen von Fensterscheiben, Fußböden und dergleichen Flächen, umfassend einen Halter (1), zwei etwa aequidistant zueinander angeordnete Pressplatten (3, 7) und einen dazwischen angeordneten, auswechselbaren, schwammartigen Reinigungskörper (6) und eine Handbetätigung (8) zum Auspressen der Flüssigkeit aus dem Reinigungskörper (6) durch Verstellen der einen zur anderen Pressplatte (3, 7), dadurch gekennzeichnet, daß die beiden Pressplatten (3, 7), den Reinigungskörper (6) zwischen sich einschließend, biegsam ausgebildet und mit einer Verbindungseinrichtung (4, 5), die ein Verstellen der einen (7) zur anderen (3) Pressplatte in Biegerichtung zuläßt, verbunden sind, wobei an der oberen Pressplatte (3) der Halter (1) und an der unteren Pressplatte (7) die zum gleichgerichteten Biegen beider Pressplatten ausgebildete Handbetätigung (8) angeordnet sind.

2. Gerät nach Anspruch 1, dadurch gekennzeichnet, daß der Reinigungskörper (6) aus einem Schwamm und einer mit diesem zusammenwirkenden elastischen Wischlippe (15) besteht.

3. Gerät nach Anspruch 2, dadurch gekennzeichnet, daß der Schwamm zweiteilig in unterschiedlichen Härtegraden ausgeführt ist.

4. Gerät nach Anspruch 2 oder 3, dadurch gekennzeichnet, daß die Wischlippe (15) in einem Einschubkanal (13) am Rand der unteren Pressplatte (7) lösbar befestigt ist, und daß der Einschubkanal (13) auf der Schwammseite mit Aussparungen (14) versehen ist.

5. Gerät nach einem der Ansprüche 1 bis 4, dadurch gekennzeichnet, daß die untere und obere Pressplatte (3, 7) etwa mittig über eine senkrecht zu den Pressplatten stehende Gleitführung verbunden sind, und daß an der unteren Pressplatte beidseitig zumindest je eine Handbetätigung zum gemeinsamen Durchbiegen beider Pressplatten vorgesehen sind.

6. Gerät nach einem der Ansprüche 1 bis 4, dadurch gekennzeichnet, daß die untere und obere Pressplatte (3, 7) beidseitig mit je einer Gleitführung verbunden sind.

7. Gerät nach Anspruch 6, dadurch gekennzeichnet, daß die eine Gleitführung (5) als Schrägführung (20) und die andere im Bereich der Handbetätigung (8) liegende als Stützführung (4) ausgebildet ist.

8. Gerät nach Anspruch 7, dadurch gekennzeichnet, daß die Pressplatte (3) im Bereich der Gleitführungsbefestigung versteift ist.

9. Gerät nach Anspruch 8, dadurch gekennzeichnet, daß die Pressplatte (3) über einen abgewinkelten Haltebereich (2) versteift ist.

10. Gerät nach Anspruch 9, dadurch gekennzeichnet, daß der Haltebereich (2) mit einer Hinterschneidung (16) versehen ist.

11. Gerät nach einem der Ansprüche 6 bis 10, dadurch gekennzeichnet, daß an einer Gleitführung (5) ein Haltehaken (10) und an der Handbetätigung (8) ein Rastabsatz (9) vorgesehen sind.

12. Gerät nach einem der Ansprüche 1 bis 11, dadurch gekennzeichnet, daß zumindest die untere Pressplatte (7) mit Wasserablauföffnungen (17) versehen ist.

**Revendications**

1. Appareil pour nettoyer des vitres de fenêtres, des sols et surfaces analogues, comprenant une poignée (1), deux plaques de pression (3, 7) sensiblement équidistantes l'une par rapport à l'autre et un corps de nettoyage (6) du type éponge disposé entre elles et interchangeable, et un élément de manoeuvre (8) pour exprimer le liquide hors du corps de nettoyage (6) par déplacement d'une plaque de pression (3, 7) par rapport à l'autre, caractérisé en ce que les deux plaques de pression (3, 7), entre lesquelles est disposé le corps de nettoyage (6), sont de constitution élastique et sont reliées par un dispositif de liaison (4, 5) permettant le déplacement d'une plaque de pression (7) en direction de l'autre (3) dans le sens de la flexion, la poignée (1) étant montée sur la plaque de pression supérieure (3) et l'élément de manoeuvre (8) constitué pour obtenir la flexion dans le même sens des deux plaques de pression étant disposé sur la plaque de pression inférieure (7).

2. Appareil selon la revendication 1, caractérisé en ce que le corps de nettoyage (6) est constitué par une éponge et par une lèvre d'essayage élastique (15) coopérant avec elle.

3. Appareil selon la revendication 2, caractérisé en ce que l'éponge est subdivisée en deux parties présentant des degrés de dureté différents.

4. Appareil selon la revendication 2 ou 3, caractérisé en ce que la lèvre d'essayage (15) est fixée de façon amovible dans un canal d'insertion (13) sur le bord de la plaque de pression inférieure (7), et en ce que le canal d'insertion (15) est muni sur le côté de l'éponge d'évidements (14).

5. Appareil selon l'une quelconque des revendications 1 à 4, caractérisé en ce que les plaques de pression inférieure et supérieure (3, 7) sont reliées l'une à l'autre sensiblement en leur centre par l'intermédiaire d'un élément de glissement perpendiculaire aux plaques de pression, et en ce que sont prévus sur la plaque de pression inférieure et de chaque côté au moins un dispositif de manoeuvre respectif destiné à la flexion en commun des deux plaques de pression.

6. Appareil selon l'une quelconque des revendications 1 à 4, caractérisé en ce que les plaques de pression inférieure et supérieure (3, 7) sont reliées de chaque côté à un élément de glissement respectif.

7. Appareil selon la revendication 6, caractérisé en ce qu'un élément de glissement (5) est constitué sous forme d'un élément de guidage oblique (20) et l'autre élément de glissement est constitué dans la région de l'élément de manoeuvre (8) sous forme d'un élément d'appui (4).

8. Appareil selon la revendication 7, caractérisé en ce que la plaque de pression (3) est renforcée dans la région de la fixation de l'élément de glissement.

9. Appareil selon la revendication 8, caractérisé en ce que la plaque de pression (3) est renforcée au moyen d'une région de retenue coudée (2).

10. Appareil selon la revendication 9, caractérisé en ce que la région de retenue (2) est munie d'une contre-dépouille (16).

11. Appareil selon l'une quelconque des revendications 6 à 10, caractérisé en ce qu'il est prévu sur un élément de glissement (5) un crochet de retenue (10) et sur l'élément de manoeuvre (8) une butée d'arrêt (9).

12. Appareil selon l'une quelconque des revendications 1 à 11, caractérisé en ce que la plaque de pression inférieure (7) au moins est munie d'ouvertures d'évacuation d'eau (17).

**Claims**

1. A tool for cleaning window panes, floors and similar surfaces, comprising a holder (1), two pressure plates (3, 7) arranged substantially equidistant from one another and an exchangeable sponge-like cleaning element (6) arranged therebetween and a manual actuator (8) for squeezing the liquid from the cleaning element (6) by adjusting one pressure plate relative to the other pressure plate (3, 7), characterised in that the two pressure plates (3, 7) are constructed flexibly, enclosing the cleaning element (6) therebetween, and are connected by a connecting device (4, 5) which allows adjustment of one pressure plate (7) relative to the other (3) in the bending direction, the holder (1) being arranged on the upper pressure plate (3) and the manual actuator (8) constructed so as to allow the two pressure plates to bend in the same direction being arranged on the lower pressure plate (7).

2. A tool according to claim 1, characterised in that the cleaning element (6) consists of a sponge and a resilient wiping lip (15) co-operating therewith.

3. A tool according to claim 2, characterised in that the sponge is constructed in two parts having differing degrees of hardness.

4. A tool according to claim 2 or 3, characterised in that the wiping lip (15) is detachably fixed in an insertion channel (13) on the edge of the lower pressure plate (7), and in that the insertion channel (13) is provided with openings (14) on the sponge side.

5. A tool according to one of claims 1 to 4, characterised in that the lower and upper pressure plate (3, 7) are connected substantially centrally via a slideway extending perpendicularly to the pressure plates, and in that at least one respective manual actuator is provided on either side on the lower pressure plate for bending the two pressure plates together.

6. A tool according to one of claims 1 to 4, characterised in that the lower and upper pressure plate (3, 7) are connected on either side by a respective slideway.

7. A tool according to claim 6, characterised in that one slideway (5) is constructed as an oblique guide (20) and the other, located in the region of the manual actuator (8), as a supporting guide (4).

8. A tool according to claim 7, characterised in that the pressure plate (3) is reinforced in the region of the slideway fixing.

9. A tool according to claim 8, characterised in that the pressure plate (3) is reinforced by an angled holding region (2).

10. A tool according to claim 9, characterised in that the holding region (2) is provided with an undercut (16).

11. A tool according to one of claims 6 to 10, characterised in that a holding hook (10) is provided on one slideway (5) and a catch shoulder (9) on the manual actuator (8).

12. A tool according to one of claims 1 to 11, characterised in that at least the lower pressure plate (7) is provided with water outlet openings (17).

*Fig.1*

_Fig.2_

_Fig.3_

Fig.4